# EUROPEAN PATENT APPLICATION

(11) **EP 3 967 974 A1**
(43) Date of publication of application: **16.03.2022**
(21) Application number: 20195464.1
(22) Date of filing: 10.09.2020
(51) Int. Cl.: G01C 21/00

(54) **METHOD AND SYSTEM FOR REFERENCING AIRCRAFT-RELATED POSITION DATA TO AN EARTH-RELATED COORDINATE SYSTEM**

(71) Applicant: mdGroup Germany GmbH, 57072 Siegen (DE)
(72) Inventor: Seube, Nicolas, 23700 Le Compas (FR); Mugner, Elliot, 31100 Toulouse (FR); Keyetieu, Rabine, 31500 Toulouse (FR); Lafleur, Maxime, 31520 Ramonville St-Agne (FR)
(74) Representative: Glawe, Delfs, Moll

(57) **Abstract**

Method for referencing aircraft-based position data to an Earth-related coordinate system. The method comprises obtaining position data from objects on the ground with an aircraft being in flight. The objects on the ground include a reference target, the reference target comprising a target device (21) having known coordinates in an Earth-related coordinate system, a first catenary line (13) being suspended from the target device (21) and a second catenary line (14) being suspended from the target device (21). The invention further relates to a corresponding system.

## Description

The invention relates to a method and a system for referencing aircraft-related position data to an Earth-related coordinate system.

With an aircraft being in flight above a geographical area position data from objects on the ground can be obtained by measuring the position of the object with a measuring device of the aircraft. The measurement device of the aircraft measures the position of the object relative to a coordinate system that is attached to the aircraft (air-craft-related coordinate system). If the position and the orientation of the aircraft relative to the Earth is known, the position data from the aircraft-related coordinate system can be georeferenced so that the position data from the aircraft-related coordinate system is transferred to position data relative to the Earth.

The coordinate system of the aircraft can be referenced to the Earth by known navigation systems and sensors. For example the position of the aircraft relative to the Earth can be determined with a Global Navigation Satellite System (GNSS) like GPS (Global Positioning System). The aircraft can further include an Inertial Measurement Unit (IMU) for measuring the orientation of the aircraft relative to the Earth or a linear acceleration and angular velocity of the aircraft. If the position and orientation of the aircraft are known the coordinates from the aircraft-related coordinate system can be transferred to positions relative to the Earth.

The accuracy with which position data from the aircraft-related coordinate system can be transferred to positions relative to the Earth depends on the accuracy with which the position and the orientation of the aircraft relative to the Earth are known. It also depends on the accuracy with which the position of an object on the ground relative to the aircraft is measured. This results in several sources of error which may negatively affect the accuracy of the transfer of position data from the aircraft-related coordinate systems to positions relative to the Earth.

The invention is based on the object of presenting a method and a system for referencing aircraft-based position data to an Earth-related coordinate system. Proceeding from the prior art specified, the object is achieved by the features of the independent claims. Advantageous embodiments are specified in the dependent claims.

In the inventive method an aircraft being in flight is used for obtaining position data from objects on the ground. The objects on the ground include a reference target. The reference target comprises a target device having known coordinates in an Earth-related coordinate system. The reference target further comprises a first catenary line being suspended from the target device and a second catenary line being suspended from the target device.

A catenary line has defined properties in the Earth-related coordinate system. The catenary line extends in a vertical plane being parallel to the direction of gravity. The catenary line further extends along a known path in the form of a catenary curve between two suspension points. Based on these known properties the catenary line can be identified in the position data that is obtained with the aircraft. In particular, the three-dimensional coordinates of the intersection point of the two catenary lines can be determined. This intersection point may correspond to a target reference point. Using the air-craft-related position data of the catenary lines and using the position and orientation information of the aircraft that is obtained by the aircraft navigation system the position data of the intersection point of the two catenary lines can be transferred to an Earth-related coordinate system. If the three-dimensional coordinates of the intersection point in the Earth-related coordinate system are identical to the coordinates of the intersection point that are derived from the known Earth-related position of the target device it can be concluded that the aircraft-based position data is correctly transferred to the Earth-related coordinate system. If the computed coordinates of the intersection point deviate from the known coordinates in the Earth-related coordinate system the accuracy of the coordinate transfer can be assessed.

The target device can have a defined position relative to a reference geodetic point, where the Earth-related coordinates of the reference geodetic point are known from a previous geodetic survey. For example, the target device may be at the same planimetric coordinates as the reference geodetic point and at a vertical position above the reference geodetic point, for example 1 meter vertically above the survey point. It is also possible that the inventive method includes a step of measuring the Earth-related coordinates of the reference point of the target device. The target device may comprise a GNSS receiver (GNSS - Global Navigation Satellite System) for measuring the Earth-related coordinates of the target device. Earth-related coordinates that are measured are considered to be known coordinates of the target device within the meaning of the invention. The target device can be arranged on a tripod for giving the target device a well-defined position.

The first catenary line can be provided by a chain that is suspended from the target device. Alternatives like ropes, cables or similar devices are possible. One end of the first catenary line can be connected to the target device. The other end of the first catenary line can be suspended from a support structure. The support structure can be a permanent structure like a tree, a stone or a building. The support structure can also be a structure that is installed specifically for the purposes of the invention. For example, a pole can be driven into the ground or a tripod can be set up as a support structure for suspending the catenary line. The catenary line can extend from a first attachment point on the target device to a second attachment point that on the support structure.

The length of the first catenary line can be between 1 meter and 20 meter, preferably between 2 meter and 10 meter. The difference between the highest point of the first catenary line and the lowest point of the first catenary line can correspond to at least 5%, preferably at least 10%, more preferably at least 20% of the length of the first catenary line. The lowest point of the first catenary line can be at least 10 cm, preferably at least 20 cm, more preferably at least 50 cm above the ground. For being able to comfortably attach the first catenary line to the target device and/or the support structure the attachment points can be arranged between 1 meter and 3 meter above the ground. The second catenary line can have the same features that are described with respect to the first catenary line.

The measuring device of the aircraft can be adapted for measuring the distance and the angular position of an object on the ground relative to the position of the aircraft. In one embodiment light is emitted from the aircraft to the object and light reflected back from the object to the aircraft is registered in the aircraft. From the direction to which the light was emitted the angular position of the object relative to the aircraft can be determined. From the time of flight of the light from the aircraft to the object and back the distance between the aircraft and the object can be determined.

The measuring device can be adapted to emit a light beam to the object. The light beam can be a collimated light beam. The light beam can have a small diameter like e.g. less than 1 cm when the light hits the object. The measuring device can be configured to change the direction of the light beam. By changing the direction of the light beam the measuring device can obtain position data from different positions on the ground. The measuring device can be adapted for scanning along a track on the ground so that position data is obtained for a plurality of positions along the track. The distance between adjacent positions for which position data is obtained can be between 2 cm and 20 cm, preferably between 5 cm and 10 cm. The measuring device can be a LiDAR (Light Detection And Ranging) that emits the LASER beams at various angles and measures distances from the detected point and the optical center of the LiDAR.

By scanning along an appropriate track, a surface area on the ground can be surveyed. Surveying a surface area can be done by scanning the light beam in a lateral direction. The lateral scanning action of the light beam can be combined with a longitudinal flight path of the aircraft. The longitudinal flight direction of the aircraft is preferably perpendicular to the lateral scanning action of the light beam. The scanning of the light beam and the flight path of the aircraft can be configured so that a surface area including the reference target is scanned. It is also possible to scan this surface area with an aircraft that stays in a fixed position wherein the light beam is scanned in a lateral direction and a longitudinal direction.

The aircraft can be equipped with a navigation system. The navigation system can comprise a GNSS receiver for determining the position of the aircraft relative to the Earth. The navigation system can include an IMU for determining the orientation of the aircraft relative to the Earth and/or any angular velocity and/or linear acceleration of the aircraft relative to the Earth.

With the measuring device position data is obtained in the aircraft-related coordinate system. By geo-referencing the position data of the coordinate system of the aircraft can be transferred to an Earth-related coordinate system in which the coordinates define a position relative to the Earth. For transferring the position data from the coordinate system of the aircraft to the Earth-related coordinate system the position of the object relative to the aircraft obtained with the measuring device and the aircraft position and orientation obtained with the navigation system of the aircraft for the same point in time are evaluated and the coordinates of the object in the coordinate system of the aircraft are referenced to coordinates of the same object in the Earth-related coordinate system.

The position data gathered with the measuring device includes position data from the reference target. Due to its characteristic catenary shape the catenary lines can be identified in the data set of the position data. The position data representing the catenary lines can be segmented from the data set of the position data.

The intersection point between the two catenary lines of the reference target can be computed from the segmented position data. The coordinates of the intersection point in the Earth-related coordinate system can be computed. The computed coordinates of the intersection point can be compared to the known coordinates of the intersection point in the Earth-related coordinate system.

If the data obtained with the measuring device and the navigation system of the aircraft is correct, the position of the intersection point as computed from aircraft position, orientation, and relative position data, is identical to the known coordinates of the intersection point in the Earth-related coordinate system. If there is any deviation in the data obtained with the aircraft, the computed coordinates of the intersection point will differ from the known coordinates of the intersection point in the Earth-related coordinate system. The extent of the deviation can be used for assessing the accuracy of the position data gathered with the aircraft.

The segmented position data of the reference target can also be used for estimating the precision of the measuring device. The catenary lines extend along a well-defined path in the shape of a catenary curve. If the position data from the catenary lines corresponds to a catenary curve the measured position data has a high precision. If the position data from the catenary lines deviates from this shape the measuring device has a low precision.

The first catenary line extends within a first vertical plane. The second catenary line extends within a second vertical plane. The angle enclosed between the first catenary line and the second catenary line with respect to these vertical planes can be greater than 30°, preferably greater than 60°, more preferably between 80° and 100°. Identification of the intersection point between the two catenary lines is facilitated if the path of the two catenary lines is clearly different. This is not the case if the two catenary lines extend nearly in parallel. This is the case if the two vertical planes enclose an angle of roughly 90°. This is also the case if the two vertical planes enclose an angle of 180°, which means that the catenary lines extend in opposite directions from the target device within the same plane. In this case the intersection point is defined by the different angles under which the catenary lines approach the intersection point. The catenary lines can start from the target device at an angle between 30° and 60° relative to the vertical direction.

For use in combination with a LiDAR measuring device the material of the catenary lines preferably has a light color that has good reflective properties for the light emitted by the LiDAR measuring device. The surface of the material can be rough so that the light is scattered back rather than being mirror-like reflected. The diameter of the catenary lines can for example be between 1 cm and 5 cm.

The flight path of the aircraft during the measurement can be directed so that a vertical plane that is spanned by the flight path intersects with the vertical planes of both catenary lines at an angle of less than 50°, preferably at an angle of less than 30°. The vertical plane of the flight path can be close to the target device. It is also possible to have some lateral separation between the vertical plane of the flight path and the target device, for example a separation between 10 m and 30 m.

The aircraft can be an unmanned aerial vehicle (UAV). The air-craft can be a vertical takeoff and landing (VTOL) aircraft.

The weight of the aircraft including the measuring device can be between 5 kg and 100 kg.

The invention also relates to a system for referencing air-craft-based position data to an Earth-related coordinate system. The system comprises an aircraft with a measuring device for obtaining position data from objects on the ground. The system further comprises a reference target on the ground. The reference target includes a target device with known coordinates in an Earth-related coordinate system, a first catenary line being suspended from the target device and a second catenary line being suspended from the target device.

The system can be developed with further features which are described in the context of the method according to the invention. The method can be developed with further features which are described in the context of the system according to the invention.

In the following, the invention is described in exemplary fashion on the basis of advantageous embodiments, with reference being made to the attached drawings. In detail:
- Fig. 1:: shows an embodiment of the inventive system;
- Fig. 2:: shows a reference target in a side view and a top view;
- Fig. 3:: shows a schematic illustration of the system in operation;
- Fig. 4:: shows a flow chart of the inventive method;
- Fig. 5:: shows a block diagram of the inventive system.

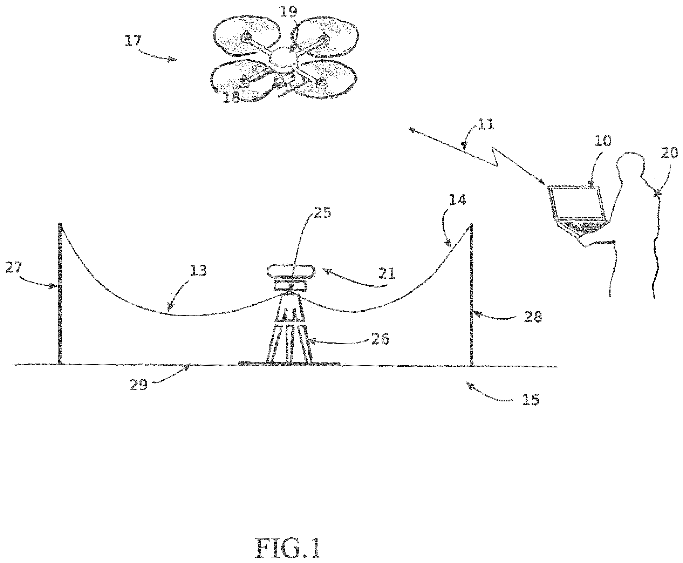

In Fig. 1, a UAV 17 is operated remotely by a ground-based operator 20. The operator 20 uses a remote control 10 for controlling the UAV 17. The remote control 10 is interconnected with the UAV 17 by a radio frequency (RF) link 11. Mission planning information including flight control and operating instructions for the UAV 17 are either stored in a controller memory of the remote control 10 or a in controller within a body 19 of the UAV 17. The UAV 17 carries a measuring device in form of a LiDAR scanner 18. The LiDAR scanner 18 comprises a laser scanner, an Inertial Measurement Unit (IMU), and a GNSS receiver. The LiDAR system 18 is powered by the UAV 17.

A reference target 15 includes a GNSS base station 21 being arranged on a tripod 26. The GNSS base station 21 is disposed in a fixed position relative to the Earth and the three-dimensional coordinates of the position within the Earth-related coordinate system are determined by a communication between the GNSS base station 21 and satellites.

The GNSS base station 21 comprises an attachment point 25 the three-dimensional position of which relative to the coordinates determined with the GNSS base station 21 is known. For, example the attachment point 25 can be disposed 10 cm vertically below the position that is determined with the GNSS base station 21. The GNSS base station 21 forms a target device within the meaning of the invention.

The reference target 15 further comprises a first catenary line 13. One end of the first catenary line 13 is suspended from an attachment point 25 at the lower end of the GNSS base station 21. The other end of the first catenary line 13 is suspended from a first pole 27 installed by the operator 20. The first pole 27 has a height of about 2 m. The horizontal distance between the first pole 27 and the GNSS receiver 21 is about 5 m. The lowest point of the first catenary line 13 is about 1 m above the ground 29. The reference target 15 further comprises a second catenary line 14 that is correspondingly suspended between the attachment point 25 of the GNSS receiver 21 and a second pole 28.

The first and second catenary lines 13, 14 are formed by two chains of light color. The chains each have a length of about 6 m and a diameter of about 3 cm. The attachment point 25 corresponds to the intersection point of the two catenary lines 13, 14.

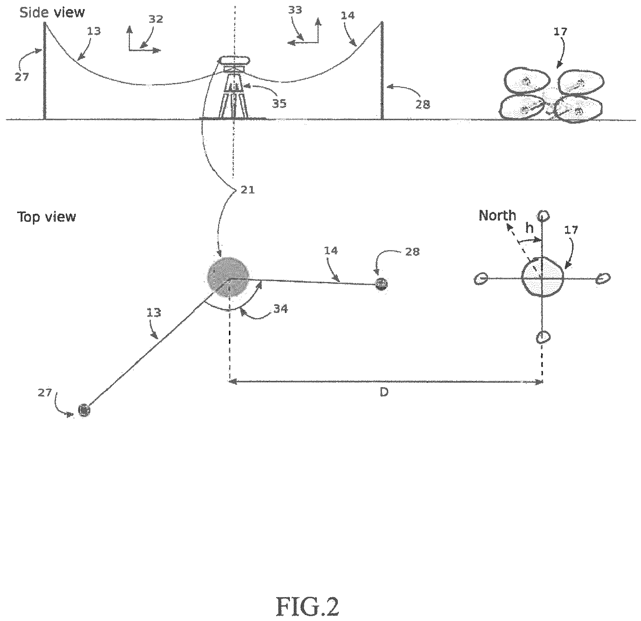

The first catenary line 13 extends within a first vertical plane 32, the second catenary line extends within a second vertical plane 33. According to the top view in fig. 2 the angle 34 enclosed between the two vertical planes 32, 33 is about 130°. The angle 35 that is enclosed between the catenary lines 13, 14 and the vertical direction directly adjacent to the attachment point 25 is about 45°.

Fig. 2 represents the system before the UAV 17 takes off. The along track axis of the UAV 17 is aligned with one of the catenary lines 13, 14 at a heading h, as measured by its internal magnetometer or IMU. The UAV 17 is located at a distance D from the GNSS base station 21. The operator 20 provides the remote control 10 with an information on the distance D between the UAV 17 and the reference target 15. The UAV 17 computes its flight plan with which the UAV 17 can gather position data from the reference target 15.

The UAV 17 computes its flight plan with which the UAV 17 can gather position data from the reference target 15. The flight plan consists of at least one survey line over the refer target 15. Depending on what type of accuracy and/or precision assessment the user wants, the UAV can fly multiple lines over the reference target 15.

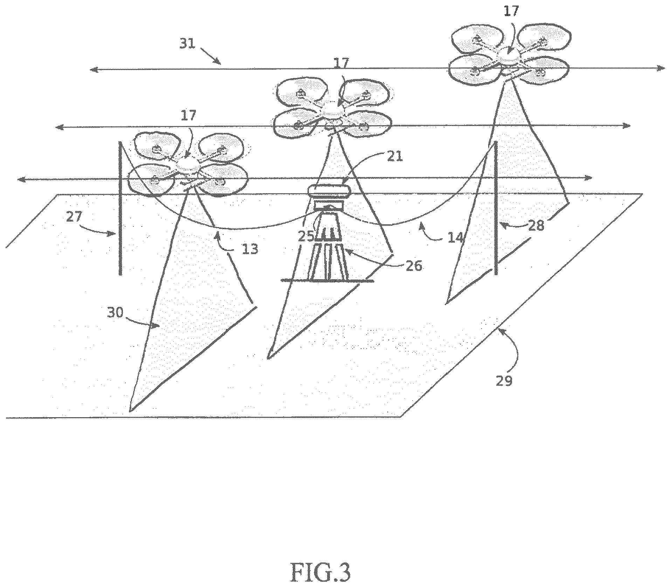

In Fig. 3 the UAV 17 is shown in flight above the reference target 15. The UAV 17 flies three parallel survey lines 31 over the reference target 15. The LiDAR 18 mounted on the UAV scans the ground in a direction perpendicular to the direction of the survey lines 31. Survey lines 31 are determined automatically by the UAV from the knowledge of D and h, at a user defined relative height.

The LiDAR scanner 18 emits laser beams 30 with varying directions so that the light of the laser beams 30 is reflected back to the LiDAR system 18 by objects on the ground. From the direction of the laser beams 30 and the time of flight of the laser light the position of the object relative to the UAV 17 can be determined. The scanning of the ground with the laser beams 30 results in a point cloud, wherein each point of the point cloud represents a position on the ground respectively the position of an object on the ground.

By using additional information from the navigation system of the UAV 17, namely from the IMU and the GNSS receiver of the UAV 17, the position data of the point cloud is georeferenced as 3D points in an Earth-related coordinate system.

The georeferenced points located on the catenary lines 13, 14 are automatically segmented by using a criterion based on the known geometry of the target (catenary curves). Each catenary line 13, 14 will be segmented. From the resulting cluster of points, the catenary vertical plane 32, 33 will be estimated, and a 2D catenary model will be constructed within a 2D frame contained in each catenary vertical plane 32, 33. The intersection point 15 between the catenary lines 13, 14 is determined by identifying the intersection between planes 32, 33 and by projecting the estimated catenary model of the first catenary line 13 onto plane 32 and the estimated catenary model of the second catenary line 14 onto plane 33.

As further background for the methods of evaluating a point cloud gathered with a LiDAR system we refer to Canavosio-Zuzelski, R., Hogarty, J., Rodarmel, C., Lee, M., Braun, A.: Assessing lidar Accuracy with Hexagonal Retro-Reflective Targets, Photogrammetric Engineering and Remote Sensing, 2013, Vol 79, No 7, pp 663-670 and Kim, M.; Park, S.; Danielson, J.; Irwin, J.; Stensaas, G.; Stoker, J.; Nimetz, J. General External Uncertainty Models of Three-Plane Intersection Point for 3D Absolute Accuracy Assessment of lidar Point Cloud. Remote Sens. 2019, 11, 2737.

The computed three-dimensional coordinates of the intersection point 25 between the two catenary lines 13, 14 in the Earth-related coordinate system can be compared to the known three-dimensional coordinates of the intersection point 25 obtained with the GNSS base station 21. From the deviation between the two sets of coordinates of the intersection point 25 the accuracy of the LiDAR measurement can be assessed.

The three-dimensional coordinates of the position data representing the catenary lines 13, 14 can be compared to the known form of catenary curves. By doing this the precision of the LiDAR measurement can be assessed.

The accuracy and/or precision assessment method comprises the following steps:
1. On the tripod 26 used to establish the GNSS base station 21 fix at least two chains maintained by two poles. The chain will form catenary curves and will align on the local gravity vector;
2. The UAV axis can be visually aligned with one of the catenary lines 13, 14. Before taking-off, the UAV 17 determined its heading thanks to a magnetometer of an IMU and the user enters the distance D between the UAV 17 and the GNSS base station 21;
3. A flight path is automatically determined by the UAV computer. This flight path consists of a series of survey lines 31 scanning the catenaries 13, 14 and the GNSS base station 21 at different headings;
4. The UAV 17 takes off, follows the flight plan and lands;
5. LiDAR, IMU and GNSS data are georeferenced to produce a point cloud of the scene and the catenary curves are segmented automatically by a classification process;
6. From the point cloud of the catenary curve, the coordinates of the intersection point 25 in an Earth-related coordinate system are computed and compared to the coordinates of the GNSS based station 21 in the Earth-related coordinate system;
7. The precision of the LiDAR system is assessed in comparing the LiDAR point describing the catenary curves with the adjusted model of the two catenary curves.

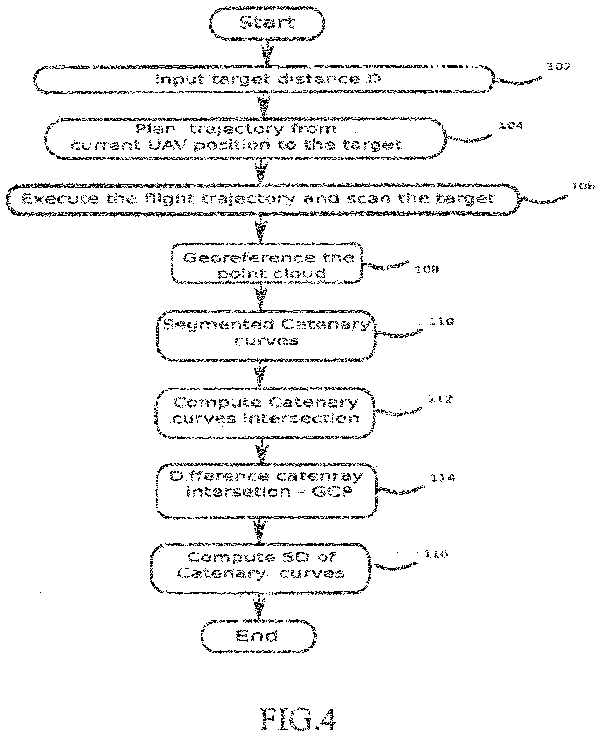

Fig. 4 is a flowchart of the inventive method. At a start step 102 the UAV distance to the Catenary target is input, which, in turn feeds this value to the logic block 104. The input data block 104 computes a flight plan that will enable the UAV 17 to take-off and fly over the Catenary target. This flight plan is sent to the UAV controller and logic block 106 makes the UAV to follow the planned trajectory and fly over the target whilst scanning it. Logic block 108 georeferences the raw data within the UAV on-board computer. Logic block 110 segments the georeferenced point cloud in several subsets of points, each of them corresponding to a catenary line 13, 14 of the target. Logic block 112 computes the intersection point 25 between catenary lines 13, 14 and passes it to the Logic Block 114 which computes the difference to the coordinates of the intersection point 25 in the Earth-related coordinate system. Logic Block 116 computes the Standard Deviation (SD) of the distance between a point belonging to a catenary line 13, 14 and the computed model of the catenary line.

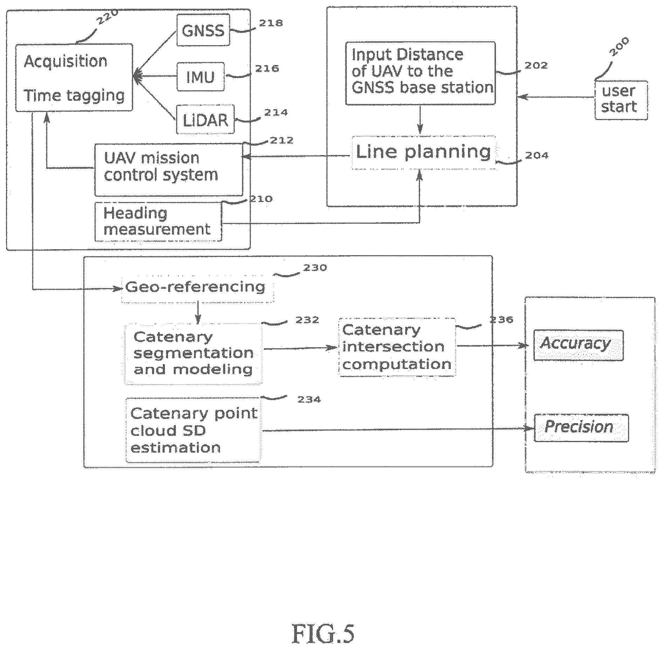

FIG. 5 is an exemplary functional block diagram wherein the electronic system is implemented within the UAV 17 and on an external computer. Upon reception of a start signal 200 from the user, the UAV mission controller system 204 sends a request to the input module 202 and to the heading measurement device integrated within the UAV. The distance of the UAV to the GNSS base station is input by the user to module 204. The heading of the UAV before take-off is sent by the block module 210. The Block module 212 receive the flight plan as computed by the line planning block module 204. It activates the LiDAR system acquisition 220 and the GNSS (block 218), IMU (block 216) and LiDAR (Block 214). Raw LiDAR, IMU and GNSS data are georeferenced by block 230 in a separate computer. In block module 232 the LiDAR points in cartesian coordinates are then classified into Catenary points/non Catenary points. Catenary points are automatically segmented according to the catenary line they belong to. Each catenary line is modeled by a parametric model. Module 236 computes the intersecting point of each pair of catenary lines, in considering a reliability index of the estimation. The position of the intersecting point is a weighted average of the intersecting point, the weight being the reliability index of each intersection point. Block module 234 estimate for each catenary line the 3D distance of all points to the catenary line. The standard deviation of this quantity is output as the precision of the LiDAR system 214, 216, 218, mounted on the UAV.

## Claims

1. Method for referencing aircraft-based position data to an Earth-related coordinate system, the method comprising obtaining position data from objects on the ground with an aircraft being in flight, the objects on the ground including a reference target, the reference target comprising a target device (21) having known coordinates in an Earth-related coordinate system, a first catenary line (13) being suspended from the target device (21) and a second catenary line (14) being suspended from the target device (21).

2. Method as claimed in claim 1, further comprising measuring the position of the target device (21) in the Earth-related coordinate system.

3. Method as claimed in claim 1 or 2, wherein the target device (21) is arranged on a tripod (26).

4. Method as claimed in any one of claims 1 to 3, wherein an end of the first catenary line (13) and/or an end of the second catenary line (14) is suspended from a support structure (27, 28).

5. Method as claimed in claim 4, further comprising installing the support structure (27, 28) to the ground.

6. Method as claimed in any one of claims 1 to 5, wherein the first catenary line (13) and/or the second catenary line (14) is formed by a chain, a rope or a cable.

7. Method as claimed in claim 6, wherein the first catenary line (13) and/or the second catenary line (14) has a diameter between 1 cm and 5 cm.

8. Method as claimed in claim 6 or 7, wherein the first catenary line (13) and/or the second catenary line (14) has a light color.

9. Method as claimed in any one of claims 1 to 8, wherein the position data is obtained with a LiDAR (18).

10. Method as claimed in any of claims 1 to 9, further comprising segmenting the first catenary line (13) and the second catenary line (14) from the position data.

11. Method as claimed in claim 10, further comprising computing the intersection point (25) of the catenary lines (13, 14) from the segmented position data.

12. Method as claimed in claim 11, further comprising comparing the coordinates of the intersection point (25) in the air-craft-related coordinate system with the coordinates of the intersection point (25) in the Earth-related coordinate system.

13. Method as claimed in any of claims 10 to 12, further comprising comparing the segmented position data with an ideal catenary curve.

14. System for referencing aircraft-based position data to an Earth-related coordinate system, the system comprising an aircraft (17) with a measuring device (18) for obtaining position data from objects on the ground, and a reference target (15) on the ground, the reference target (15) including a target device (21) with known coordinates in an Earth-related coordinate system, a first catenary line (13) being suspended from the target device (21) and a second catenary line (14) being suspended from the target device (21) .
